# FASCICULE DE BREVET EUROPEEN

(11) **EP 0 790 146 B1**
(45) Date de publication et mention de la délivrance du brevet: **08.05.2002**
(21) Numéro de dépôt: 97101400.6
(22) Date de dépôt: 29.01.1997
(51) Int. Cl.: B60N 3/14

(54) **Allume-cigares à dispositif de protection, notamment pour véicule automobile**
Fahrzeugzigarettenanzünder mit einer Schutzvorrichtung
Vehicle lighter with a protection device

(30) Priorité: 16.02.1996 FR 9601959
(43) Date de publication de la demande: 20.08.1997
(73) Titulaire: VALEO VISION, 93000 Bobigny (FR)
(72) Inventeur: Thivet, Gilles, 81290 Labruguiere (FR)
(74) Mandataire: Gamonal, Didier

(56) Documents cités:
- WO-A-95/19273
- DE-A- 4 042 043
- US-A- 4 459 464

## Description

La présente invention concerne les allume-cigares, notamment pour véhicule automobile, et se rapporte plus particulièrement au corps d'allumage que comporte un tel allume-cigares.

Ainsi qu'on le sait le corps d'allumage forme un organe de prise de courant et sert de réceptacle à un bouchon chauffant ou à une prise de courant pour alimenter un accessoire.

Pour ce faire le corps d'allumage présente une douille d'allumage avec un fond de part et d'autre duquel sont montés, d'une part à l'intérieur de ladite douille, un bilame et une première pièce d'isolation électrique, dite première rondelle isolante, et, d'autre part, à l'extérieur de ladite douille, une seconde languette d'alimentation électrique, dite seconde languette d'alimentation, associée à ladite douille, une seconde pièce d'isolation électrique, dite seconde rondelle isolante, interposée axialement entre ladite seconde languette et une première languette d'alimentation électrique, dite première languette d'alimentation, associée au bilame en étant reliée électriquement à celui-ci par un organe de fixation assemblant le bilame, les rondelles isolantes et les languettes d'alimentation, au fond de la douille d'allumage.

Usuellement un dispositif de protection contre les surchauffes est prévu. En effet dans certaines circonstances les lames, que présente le bilame, peuvent rester en prise avec la coupelle de réception du corps de chauffage, que présente le bouchon chauffant, et ce malgré que le corps de chauffage ait atteint la température désirée. En outre un court-circuit peut se produire. Tout ceci peut être une cause d'incendie du fait notamment que le corps d'allumage est fixé sur une paroi fixe usuellement en matière plastique.

Ainsi on a proposé dans le document FR-A-2 338 822 de doter la première rondelle isolante d'une creusure pour logement d'un corps fusible, qui fond pour une température déterminée et établit un court-circuit.

On peut de même provoquer un court-circuit au moyen d'une languette de sécurité en forme d'équerre, interposée entre le fond de la douille et ladite seconde languette d'alimentation, et qui vient en contact électrique avec ladite première languette d'alimentation en cas de surchauffe, comme le montre le document WO-A-95 19273, correspondant au préambule de la revendication principale.

Ces dispositions ne sont pas satisfaisantes car elles nécessitent de changer le fusible du tableau de bord associé à l'allume-cigares. En outre elles sont de nature à augmenter l'encombrement axial entre le bilame et le fond de la douille d'allumage, qui est alors déstandardisée.

On peut songer à intégrer le dispositif de protection au bouchon chauffant, mais cela entraîne de modifier celui-ci.

En outre lorsque l'on introduit une fiche dans le corps d'allumage on ne bénéficie plus de protection.

On a déjà envisagé par exemple dans les documents US-A-4,459,464 et DE-A-40 42 043 d'implanter le dispositif de protection à l'extérieur de la douille d'allumage. Dans ce cas il n'est prévu qu'une seule languette d'alimentation à savoir la première languette associée au bilame et isolée du fond de la douille par la seconde rondelle isolante en contact avec le fond de la douille d'allumage. Cette première languette sert à la fixation de l'une des extrémités d'un fusible dont l'autre extrémité est fixée à une pièce supplémentaire séparée de la première languette par une troisième rondelle d'isolation électrique.

La pièce supplémentaire sert d'appui à une rondelle élastique associée à l'écrou de l'organe de fixation en forme de boulon. Tout ceci ne fait pas appel à une disposition à deux languettes d'alimentation portées par le fond de la douille d'allumage. En outre le fusible n'est pas protégé et il peut être endommagé lors de manipulation avant montage du corps d'allumage sur sa paroi fixe. Après montage du corps d'allumage sur ladite paroi fixe le fusible peut être endommagé par exemple par un fil de connexion compte tenu que le corps d'allumage est implanté dans un environnement où existent de nombreux appareils.

La présente invention a pour objet de pallier ces inconvénients.

C'est donc un but de l'invention de créer un agencement avec un dispositif de protection ne nécessitant pas de déstandardiser la douille d'allumage.

C'est un but de l'invention de créer un agencement avec un dispositif de protection ne nécessitant pas de changer un autre fusible, tout en faisant appel à deux languettes d'alimentation électrique.

C'est encore un but de l'invention de réaliser un agencement avec un dispositif de protection de manière simple et économique, tout en étant d'un montage simple.

Suivant l'invention un corps d'allumage du type sus-indiqué est caractérisé en ce que des moyens d'isolation électrique interviennent entre la seconde languette d'alimentation et le fond de la douille d'allumage, en ce que la seconde languette d'alimentation, implantée au voisinage du fond de la douille d'allumage, est reliée électriquement audit fond par l'intermédiaire d'un fusible de sécurité électrique et thermique constituant ledit dispositif de protection contre les surchauffes ainsi que contre les surintensités, et en ce que la seconde rondelle d'isolation est conformée pour constituer un logement dudit fusible porté par une pièce de support distincte on non de la seconde languette d'alimentation assemblée au fond de la douille d'allumage par l'organe de fixation.

Grâce à l'invention la douille d'allumage peut être conservée.

Il en est de même de la première pièce (rondelle) isolante et du bilame au bénéfice de la standardisation.

Le corps d'allumage présente toujours deux languettes d'alimentation électrique. Finalement la seconde languette d'alimentation et la seconde rondelle isolante sont modifiées mais cela est facilement réalisé. La première languette d'alimentation peut être conservée. La bague éclairante, que comporte dans certaines de réalisation l'allume-cigares, n'a pas été modifiée.

L'agencement à dispositif de protection selon l'invention n'augmente pas l'encombrement axial et ne complique pas le montage de l'allume-cigares.

En effet on utilise la place disponible entre la seconde rondelle isolante et la partie axiale des languettes d'alimentation. De plus la seconde rondelle isolante évite tout contact entre la première languette d'alimentation et le fusible.

En cas de surchauffe le fusible fond. En cas de surintensité (court-circuit) le fusible fond par effet Joule. La température de fusion est de l'ordre de 110°.

Tout ceci est rendu possible du fait que le fusible est près de la douille d'allumage. Ce fusible est donc bon marché et fonctionne avec des températures plus basses que s'il avait été associé à la première languette d'alimentation.

Il est également plus fiable et plus précis du fait notamment que la douille d'allumage s'échauffe de manière plus uniforme que la première languette d'alimentation de faible surface par rapport à celle de la douille d'allumage.

Grâce à la seconde rondelle isolante on peut utiliser des fusibles de forme variée. Pour cela il suffit de conformer en conséquence cette rondelle.

Dans une forme de réalisation le fusible est porté par une pièce porteuse distincte, électriquement conductrice, en contact avec le fond de la douille d'allumage.

Des moyens d'isolation électrique interviennent entre cette pièce porteuse et la seconde languette d'alimentation présentant des moyens de contact avec une extrémité du fusible. Ce fusible s'étend en surélévation axiale par rapport au fond de la douille d'allumage.

On appréciera que la seconde languette d'alimentation n'est pas modifiée de manière profonde et que la pièce porteuse peut être moins épaisse que la seconde languette d'alimentation.

Dans un second mode de réalisation la seconde languette d'alimentation électrique est conformée pour porter à isolation électrique par rapport au fond de la douille d'allumage le fusible de sécurité électrique et thermique. Dans ce cas la seconde languette d'alimentation est reliée électriquement à la douille par ledit fusible en contact électrique, d'une part, avec le fond de la douille d'allumage, et, d'autre part, avec la seconde languette d'alimentation. Ce mode de réalisation est particulièrement avantageux car il conduit à une réduction du nombre des pièces du corps d'allumage, la seconde languette d'alimentation portant directement le fusible. Ceci permet de réduire la longueur de la connexion entre les moyens de contact portés par ladite seconde languette et le fusible au bénéfice de la fiabilité et du temps de réponse.

En outre cela permet également de réduire l'encombrement axial puisque le fusible est en contact électrique avec le fond de la douille d'allumage. Il en résulte que le fusible est moins sensible aux vibrations.

On appréciera, notamment pour réduction du temps de montage du corps d'allumage, qu'il est alors possible de former un sous-ensemble comportant la seconde languette d'alimentation et le fusible. Pour ce faire il suffit de recouvrir la seconde languette d'alimentation (la face de la base de celle-ci s'étendant parallèlement au fond de la douille d'allumage) d'un isolant électrique, par exemple par pulvérisation ou collage. En variante l'isolant électrique peut être du type collant ou d'une manière générale du type adhésif.

Cette seconde languette d'alimentation est conformée alors pour présenter de préférence des moyens d'agrafage du fusible qui fond de manière très précise en cas de surchauffe du fait qu'il est en contact direct avec le fond de la douille d'allumage.

Dans tous les cas la seconde rondelle isolante masque le fusible. Ceci est aisément réalisable car cette seconde rondelle isolante est fabriquée avantageusement par moulage, en sorte qu'elle est dotée d'une excroissance permettant de loger le fusible, qui peut être alors un fusible économique du commerce à boîtier par exemple électriquement conducteur. Ce fusible est donc protégé et ne risque pas d'être endommagé par un appareil ou un fil électrique implanté au voisinage du corps d'allumage.

Avant montage du corps d'allumage sur sa paroi fixe on ne risque pas d'endommager le fusible lors de manipulation ou du stockage de celui-ci.

D'une manière générale le fusible est logé dans une cavité au sein de la seconde rondelle isolante avantageusement dans une cavité affectant l'épaisseur de celle-ci ce qui permet de réduire l'encombrement axial.

Avantageusement l'organe de fixation est démontable en sorte que l'on peut aisément démonter la seconde rondelle isolante et changer le fusible.

On appréciera que l'on peut recycler aisément un corps d'allumage du type standard et le doter d'une seconde rondelle isolante, d'une seconde languette d'alimentation et d'un fusible selon l'invention.

La description qui va suivre illustre l'invention en regard des dessins annexés dans lesquels :
- la figure 1 est une vue en coupe axiale d'un allume-cigares selon un premier mode de réalisation de l'invention et selon la ligne 1-1 de la figure 2 ;
- la figure 2 est une vue selon la flèche 2 de la figure 1 ;
- la figure 3 est une vue de l'allume-cigares de la figure 1 sans coupe axiale ;
- la figure 4 est une vue en bout de l'allume-cigares de la figure 1, la seconde rondelle isolante ayant été ôtée ainsi que la première languette d'alimentation pour montrer le fusible et la seconde languette d'alimentation ;
- la figure 5 est une vue latérale correspondant à la figure 4 ;
- la figure 6 est une vue en coupe axiale de l'allume-cigares pour un second mode de réalisation sans la bague éclairante ;
- la figure 7 est une vue selon la flèche 7 de la figure 6 avec présence de la bague éclairante ;
- la figure 8 est une analogue à la figure 3 pour ce second mode de réalisation ;
- la figure 9 est une vue de la seconde languette d'alimentation de la figure 6 après découpage et avant pliage de ses diverses portions ;
- la figure 10 est une vue correspondant à la figure 9 après pliage et/ou roulage des portions de la seconde languette d'alimentation électrique ;
- la figure 11 est une vue selon la flèche 11 de la figure 10 ;
- les figures 12 et 13 sont des vues en coupe axiale du fusible respectivement en fonctionnement normal et après surchauffe ou surintensité.

L'allume-cigares illustré dans les figures comporte un corps d'allumage A servant de réceptacle à un bouchon chauffant B amovible ou à une fiche d'alimentation d'un accessoire. Dans ces figures les éléments identiques seront affectés par les mêmes signes de référence.

Le corps A est destiné à être fixé de manière directe ou indirecte à une paroi fixe P du véhicule, telle qu'une console ou une planche de bord.

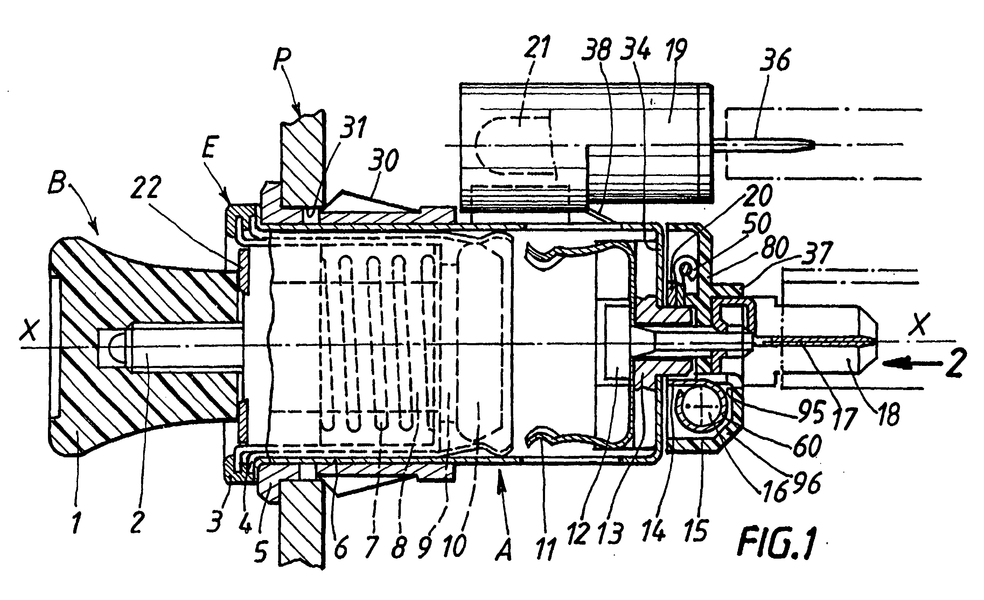

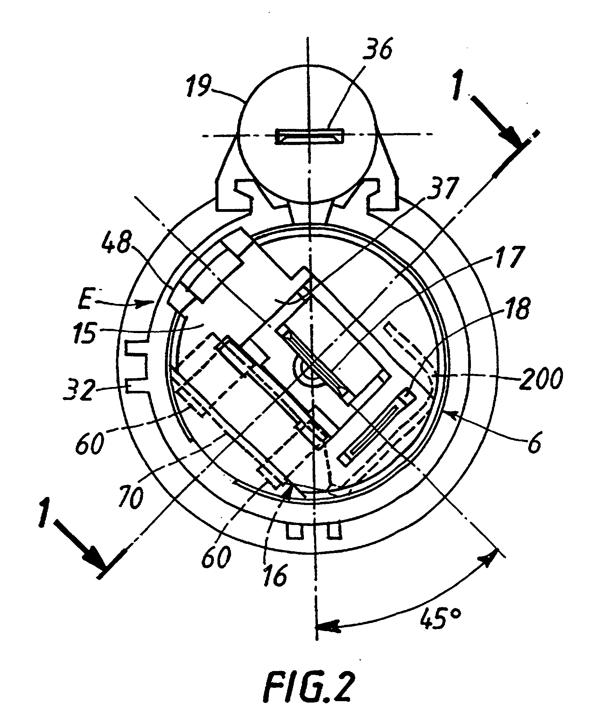

Ici le corps A est fixé à la paroi P par l'intermédiaire d'une bague éclairante E présentant à son extrémité avant un anneau 5 venant en contact avec la face avant de la paroi P et permettant de repérer l'allume-cigares la nuit. Pour ce faire cette bague E porte à son extrémité arrière un boîtier 19 à l'intérieur duquel est logée une source d'éclairage 21 telle qu'une lampe. La bague E est dotée, à la faveur de découpes, de languettes 30 élastiquement déformables dont deux sont visibles à la figure 1. Ces languettes 30, d'orientation axiale, ont une extrémité avant en forme de coin. Ainsi qu'on le sait lors du montage on introduit la bague E dans l'ouverture associée 31 de la paroi P en sorte que les languettes 30 s'escamotent radialement vers l'intérieur, puis se détendent. La paroi P, après introduction axiale de la bague E dans l'ouverture 31, est alors prise en sandwich entre l'anneau 5 et l'extrémité avant des languettes 30. La bague E présente extérieurement une protubérance 32 axiale, présentant deux rails de guidage (figure 2), pour une patte de la paroi fixe P pratiquée dans le bord de l'ouverture 31 et réalisée à la faveur de fentes 33 disposées de part et d'autre de la patte.

Ainsi il est formé un détrompeur et la bague E est calée en rotation par rapport à la paroi P en sorte que, après montage la bague E, ici en matière électriquement isolante, est liée axialement et en rotation à la paroi P ici en matière plastique, tout comme la bague E transmettant la lumière. Bien entendu le boîtier 19 portant la lampe 21 est monté par l'arrière sur la bague E à la manière d'un tiroir, ladite bague E présentant pour ce faire deux tenons engagés chacun dans une rainure réalisée dans le boîtier 19 comme visible à la figure 2.

A l'intérieur de la bague E, on introduit une douille d'allumage 6 en matière électriquement conductrice, ici en tôle emboutie. Pour cela il est formé un détrompeur 48 entre la bague E et une pièce électriquement isolante 15, décrite ci-après. Plus précisément la pièce 15 présente des saillies axiales engagées dans les rainures de la bague éclairante E.

Le détrompeur 48 permet donc un montage de la douille d'allumage 6 appartenant au corps d'allumage A dans une position angulaire déterminée.

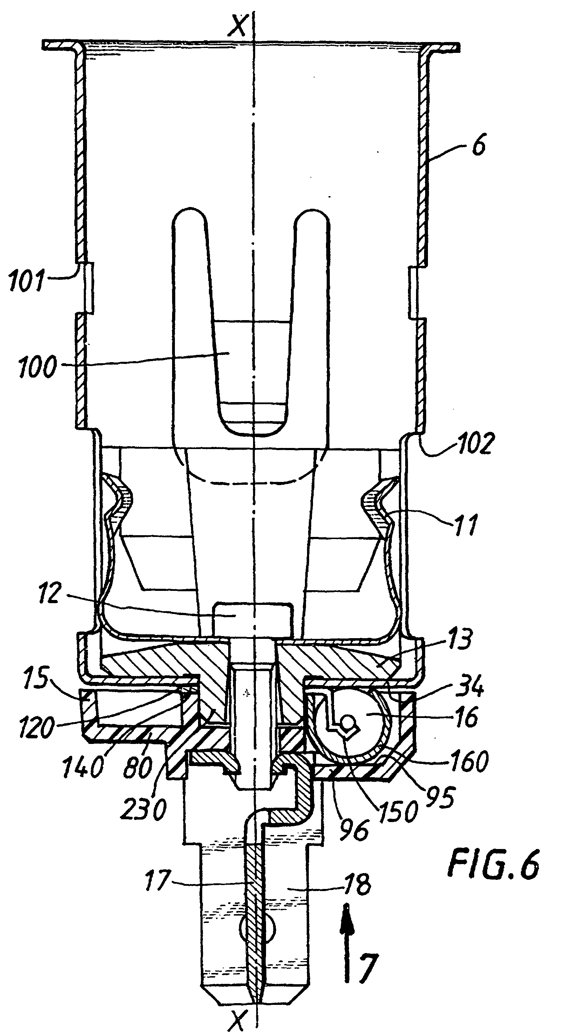

De manière connue la bague E présente localement des crans engagés dans des creusures internes, référencées en 101 à la figure 6, de la douille 6 en sorte que celle-ci est fixée à la bague E par encliquetage et donc indirectement à la paroi P.

Bien entendu la douille 6, en variante non représentée, peut être fixée directement à la paroi P. Ici la douille 6 présente à son extrémité avant une collerette prenant appui sur la face avant de l'anneau 5 de la bague E et à son extrémité arrière un fond 34 troué centralement et s'étendant perpendiculairement à l'axe X-X de symétrie axiale de l'allume-cigares. Le boîtier 19 porte en saillie une languette inclinée 38 venant en contact avec la douille 6 de forme creuse. On voit en 36 une languette d'alimentation électrique propre à être connectée à la borne positive des feux de position du véhicule, tandis que la douille 6 est propre à être connectée à la borne négative de la batterie via une seconde languette d'alimentation électrique 18, dite seconde languette d'alimentation, de manière décrite ci-après. Ainsi les languettes 38,36, ici métalliques, permettent d'alimenter électriquement la lampe 21. Intérieurement la douille 6 porte un bilame 11 avec deux lames d'orientation axiale issues d'un disque s'étendant parallèlement au fond 34 de la douille 6. Une pièce 13 électriquement isolante globalement de forme annulaire, dite seconde rondelle isolante 13, est interposée axialement entre le fond 34 et le disque du bilame 11.

Cette rondelle 13 traverse l'ouverture centrale du fond 34 à l'aide d'une douille de centrage 230 et est trouée centralement pour passage d'un organe de fixation 12, ici une vis en variante un rivet, dont la tête prend appui sur la face supérieure (ou avant) du disque du bilame 11 pour serrage du bilame 11 et de la rondelle isolante 13, entre la tête de la vis 12 et le fond 34 de la douille d'allumage 6.

A l'extérieur de la douille 6, la vis 12 en matériau électriquement conducteur, ici métallique, par sa partie filetée, traverse la pièce électriquement isolante 15 précitée, ici centrée par la douille de centrage 230 de la première rondelle isolante.

Cette pièce 15 sera dénommée ci-après seconde rondelle isolante et est ici en matière plastique moulable. Elle présente une partie principale 80 globalement de forme annulaire s'étendant parallèlement au fond 34 de la douille 6.

La rondelle 13 est également thermiquement isolante, elle est en matière thermodurcissable, telle que de la "Vyncolite" (marque déposée). La rondelle 15 est ici en polyamide 6/6 chargée.

Sur la face arrière de la rondelle 15 s'appuie la base d'une première languette électrique d'alimentation 17, dite première languette d'alimentation, associée au bilame 11 et propre à être connectée à la borne positive de la batterie. Cette base est dotée centralement d'une cheminée taraudée et est immobilisée en rotation par une nervure externe 37 d'orientation axiale issue par moulage de la seconde rondelle 15 et s'étendant vers l'extérieur en direction opposée au fond 34. Les languettes 17 et 18, ici métalliques, ont globalement une forme d'équerre et présentent donc une partie axiale épaulée pour formation d'un dispositif de connexion.

Les bases des languettes 17,18 s'étendent perpendiculairement à l'axe X-X., la base de la seconde languette d'alimentation 18 étant voisine du fond 34.

La languette 18 traverse, par sa partie axiale, une ouverture rectangulaire pratiquée dans la seconde rondelle isolante 15 en sorte qu'elle est immobilisée en rotation par rapport à la rondelle 15. La base de la languette 17 est prolongée par une partie axiale sinueuse pour coopération avec la nervure 37 (figure 2) et blocage en rotation de la languette 17.

Ainsi de manière connue la languette 17 présente une partie en forme de U (figures 1,6) dont une branche forme la base de la languette 17 et dont l'autre branche plus courte porte la partie axiale de la languette 17, le fond du U étant en contact avec la nervure précitée.

La seconde rondelle 15 forme ainsi un isolant de connexion, les bases des languettes 17,18 étant disposées de part et d'autre de la rondelle 15, de forme creuse, pour abriter la base de la seconde languette d'alimentation 18.

Plus précisément, comme mieux visible dans les figures 1 et 6, la rondelle 15 présente latéralement une jupe entourant la base de la seconde languette d'alimentation 18.

Ainsi qu'on l'aura compris la languette 17 forme un écrou pour la vis 12 en sorte que ladite vis permet un assemblage du bilame 11, des languettes 17,18 et des rondelles isolantes 13,15 au fond 34 de la douille 6, ladite vis traversant lesdites pièces. Bien entendu la douille 6 présente des ouvertures, visibles en 102 à la figure 6, au niveau des lames du bilame 11, formant organe de prise de courant, pour permettre une dilatation vers l'extérieur de celles-ci. Les extrémités des lames du bilame présentent des becs dirigés l'un vers l'autre. Ainsi ces lames s'écartent lorsque le bouchon chauffant B est enfoncé pour occuper une position de chauffage.

Les becs des lames du bilame 11 sont destinés à retenir une coupelle 10 électriquement conductrice lorsque le bouchon B est en position enfoncée de chauffage, sachant que la coupelle 10 sert de réceptacle à un corps de chauffage usuellement une résistance électrique chauffante enroulée en spirale.

Ainsi qu'on le sait le bouchon B comporte deux parties coaxiales mobiles axialement l'une par rapport à l'autre à l'encontre de moyens élastiques de rappel, ici un ressort à boudin 7. L'une des parties précitées est fixe et comporte un pare-cendres 4 en matériau électriquement conducteur, ici métallique, solidaire d'un anneau externe 3 par surmoulage. Le pare-cendres 4 est propre à venir en contact intime avec l'alésage interne de la douille 6 et présente à son extrémité avant une rainure profilée propre de manière connue à coopérer avec l'extrémité bombée de languettes de retenue d'orientation axiale, visibles en 100 à la figure 6, issues de la paroi 6 de la douille par découpe et emboutissage.

Ces languettes 100 sont dirigées axialement vers le fond 34 et s'étendent au-dessus du bilame 11. Un tube-guide 8 est également solidaire par surmoulage de l'anneau 3 en matière électriquement isolante, ici en matière plastique, tel que du polyamide 6/6.

L'anneau 3 est propre à venir en butée sur la face avant de la collerette d'extrémité libre de la douille 6, tandis que le tube-guide 8, en matière électriquement conductrice ici métallique, est entouré par le pare-cendres et présente un fond troué centralement pour servir d'appui à l'une des extrémités du ressort 7 électriquement conducteur.

Une rondelle électriquement isolante 9 est interposée axialement entre le fond du tube-guide 8 et le fond de la coupelle d'extrémité 10. La partie mobile du bouchon B comporte un manchon de guidage métallique dont le fond porte à l'aide d'un rivet de fixation (non visible) la rondelle 9, la coupelle 10 et sa résistance chauffante.

Ce manchon est guidé par le fond du tube-guide 8, plus précisément par l'alésage interne de l'ouverture centrale du tube 8. A son autre extrémité ce manchon est solidaire d'un anneau 2 en matière électriquement et thermiquement isolante. Cet anneau 2 est propre à coulisser à l'intérieur du tube 8 et sert d'appui à l'autre extrémité du ressort 7.

L'anneau 2 présente au niveau de son extrémité avant une partie filetée saillante servant à la fixation d'un bouton de préhension 1 taraudé intérieurement pour ce faire. Une rondelle 22 est interposée axialement entre le bouton 1 et la face avant de l'anneau 2 ici en matière plastique tel que du polyamide 6/6 chargé pour conférer à l'anneau 2 des propriétés d'isolation thermique.

Le bouton 1 est profilé en sorte qu'il constitue un bouton de préhension, ici en matière plastique, propre à être saisi par l'usager pour extraction du bouchon B du corps d'allumage A lorsque la résistance chauffante est chaude.

Ainsi qu'on le sait, en position normale, le bouchon B est retenu grâce à son pare-cendres 4 par les languettes de retenue 100 précitées de la douille 6. Dans cette position la coupelle 10 est à distance du bilame 11 en sorte qu'aucun circuit électrique n' est établi. Lorsque l'usager enfonce le bouton 1, la partie mobile du bouchon B est déplacée en sorte que le ressort 7 est comprimé et que la coupelle 10 vient en prise avec les lames du bilame 11. Un circuit électrique est alors établi à traverse la languette 17, la vis 12, le bilame 11, la coupelle 10, le pare-cendres 4, la douille 6 et la languette 18.

La résistance chauffante du bouchon B chauffe en sorte que les lames du bilame 11 se dilatent. A partir d'une température déterminée le ressort 7 permet d'extraire la coupelle 10 du bilame 11 car à cet instant sa force de rappel devient supérieure à la force de serrage exercée par les lames du bilame 11 sur la coupelle 10.

L'usager entend un déclic et peut extraire le bouchon B pour allumer son cigare ou sa cigarette.

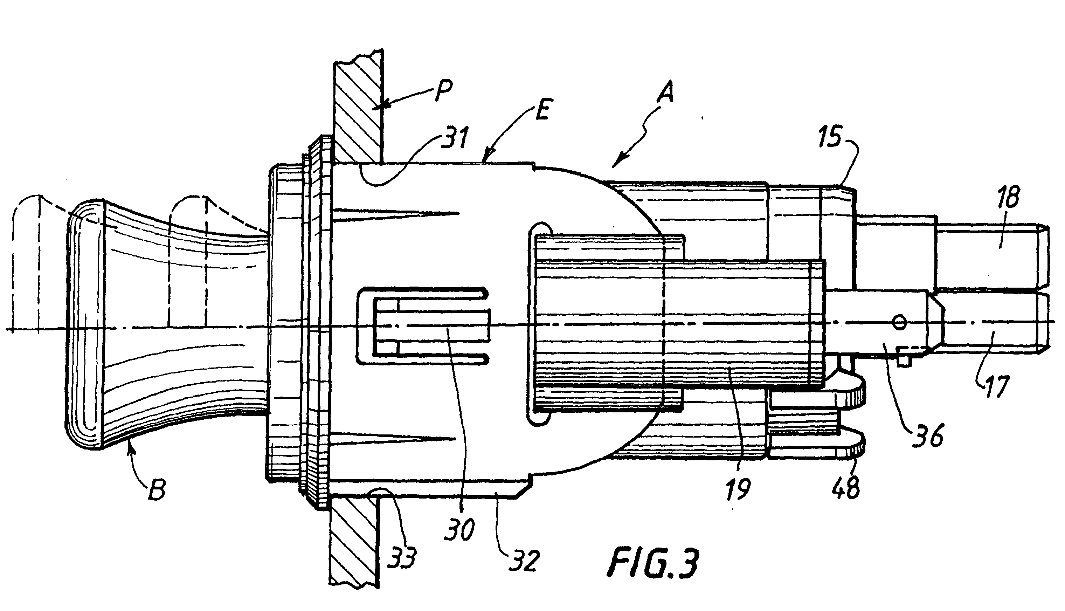

Ainsi à la figure 3, on voit les positions de sortie, normale et enfoncée du bouchon amovible, la position normale étant en trait fort. Les lames du bilame 11 s'étendent axialement et ce en direction de l'extrémité libre ouverte de la douille 6. Ces lames peuvent accidentellement être déformées. D'une manière générale un mauvais fonctionnement du bouchon B ou du bilame 11 peut se produire. Le bouchon B peut être enfoncé en position de chauffage par exemple par un paquet, tel qu'une valise, mal calé à l'intérieur du véhicule. Ainsi pour diverses raisons la coupelle 10 peut rester en prise avec le bilame 11 entraînant une surchauffe du bouchon B et du corps d'allumage A. Ceci entraîne des risques d'incendie car, notamment, la bague éclairante E et la paroi fixe P du véhicule sont en matière plastique. En outre un court-circuit peut se produire entraînant une surintensité du courant.

Ainsi le corps d'allumage A est ici équipé d'un dispositif de protection pour protéger l'allume-cigares en cas de surchauffe ou de surintensité.

Ce dispositif comporte un fusible de sécurité électrique et thermique 16.

L'invention propose de ne pas modifier la douille d'allumage 6 et d'implanter ledit fusible 16 à l'extérieur de la douille, ce qui permet également de conserver le bilame 11 et la première rondelle isolante 13.

Ultérieurement il est également possible de recycler un allume-cigares et de le doter d'un fusible de sécurité électrique et thermique 16.

Plus précisément, suivant une caractéristique de l'invention, ledit fusible 16 est logé au sein de la seconde rondelle isolante 15 conformée en conséquence pour loger ledit fusible.

La seconde languette d'alimentation 18, associée à la douille 6, est implantée au voisinage du fond 34 de la douille 6 en étant, suivant une caractéristique, reliée électriquement audit fond 34 par l'intermédiaire dudit fusible 16.

Pour ce faire, suivant une autre caractéristique de l'invention, des moyens d'isolation électrique 20,120 interviennent entre le fond 34 de la douille 6 et la seconde languette d'alimentation 18 métallique tout comme la première languette d'alimentation 17.

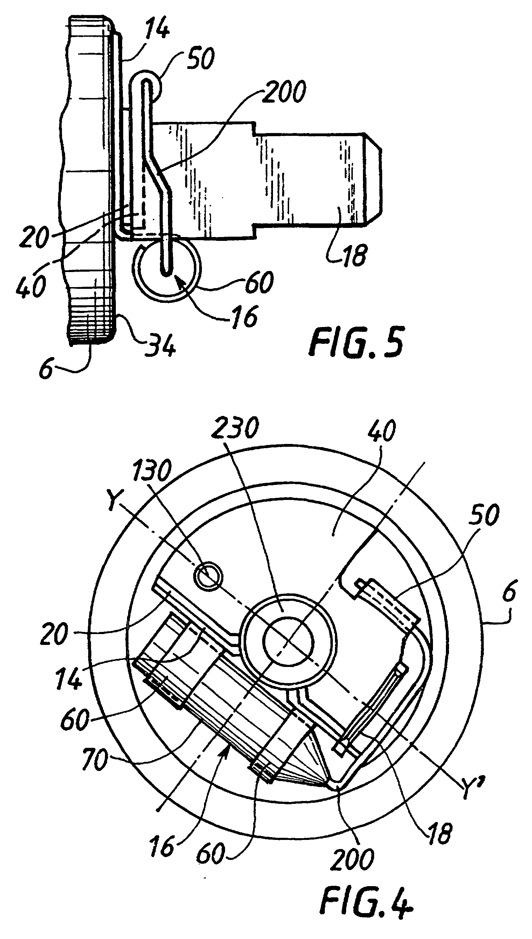

Plus précisément la languette 18, de même que la languette 17, a de manière précitée une forme d'équerre et comporte une base 40 (figure 4) 140 (figure 6) parallèle au fond 34 et une partie d'orientation axiale référencée 18 par simplicité.

La face interne, tournée vers le fond 34, de la base 40,140 est au contact des moyens d'isolation électrique 20 (figure 5),120 (figure 6).

Dans les figures 1 à 5 les moyens d'isolation électrique consistent en une rondelle électriquement isolante 20.

Dans les figures 6 à 11 les moyens d'isolation électrique consistent en un revêtement en matière électriquement isolante 120 solidaire de la base 140 par exemple par pulvérisation effectuée sur la face interne précitée de la base 140.

Bien entendu on peut inverser les dispositions d'un mode de réalisation à l'autre. De même on peut coller la rondelle électriquement isolante 20 sur la base 40,140 pour former un sous-ensemble.

Le fusible 16 peut être du type filiforme comme divulgué par exemple dans le document US-A-4,459,464 précité et comporter une partie fusible à base de plomb et d'étain, ou à base d'étain ou de cadmium, ou à base d'étain ou de zinc, entourée par une enveloppe en résine synthétique, par exemple de polyéthylène, qui a un point de fusion plus bas de la partie fusible.

Grâce à l'invention, notamment au montage du fusible au sein de la seconde rondelle isolante 15, il est possible d'utiliser n'importe quel type de fusible 16 du fait qu'il est aisé de conformer, notamment par moulage, la seconde rondelle isolante 15 pour logement dudit fusible.

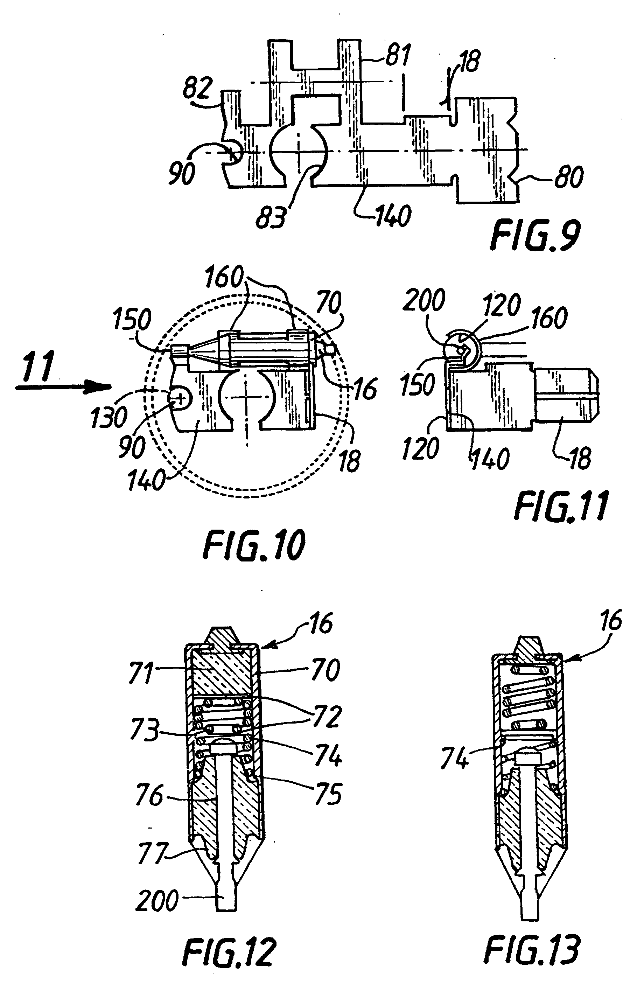

Ici le fusible 16 (figures 12 et 13) comporte un boîtier 70 à l'intérieur duquel est logée une pastille thermique fusible 71, des disques 72, un ressort de compression 73, un disque de contact 74, un ressort d'ouverture 75, un isolateur céramique 76 entourant un contact 200. Le boîtier 70 a une forme cylindrique et est électriquement conducteur en étant ici métallique. Il en est de même des disques 72,74, du contact 200 et des ressorts 73,74, toutes les pièces précitées étant donc électriquement conductrice.

Ici la pastille 71 est en matière qui se sublime (passe à l'état gazeux) en cas de surchauffe. Bien entendu en variante la matière peut se ramollir puis fondre.

Le boîtier 70, ici de forme cylindrique, présente à l'une de ses extrémités un fond et l'autre de ses extrémités est fermée par un scellement étanche 77, par exemple en résine epoxy, reliant le contact 200 et l'isolateur 76 au boîtier 70.

Le ressort de compression 73 est interposé entre les deux disques 72 et exerce une pression sur la pastille thermique 71 via le disque 72 concerné en contact avec ladite pastille. Cette pastille est donc normalement comprimée (figure 12) entre le fond du boîtier 70 et ledit disque 72. Le ressort d'ouverture 75 agit sur le disque de contact 74 en appui sur l'autre disque 72. Le disque 74 est doté de pattes, globalement d'orientation axiale, au contact de l'alésage interne du boîtier 70.

A son autre extrémité le ressort 75 prend appui sur l'isolateur 76 traversé par le contact 200. L'extrémité interne de ce contact 200 est profilée pour contact avec le disque 74. Ainsi à la figure 12 le courant électrique circule normalement dans le fusible 16, le boîtier 70 étant relié électriquement au contact 200 via le disque 74 en contact avec l'extrémité du contact 200. Ici les ressorts 73,75 sont des ressorts à boudin.

A la figure 12 le ressort 73 exerce sur le disque 74 une charge supérieure à celle exercée sur le disque 74 par le ressort 75.

En cas de surchauffe de la douille 6, lorsque la coupelle 10 reste en prise avec les lames du bilame 11 de manière précitée, la pastille 71 se sublime (passe à l'état gazeux) en sorte que le ressort 73 est admis à se détendre. La charge exercée par le ressort 73 sur le disque 74 diminue donc à partir d'un seuil précis et le ressort d'ouverture 75 déplace alors le disque 74 qui s'éloigne du contact 200 comme visible à la figure 13. Aucun courant électrique ne circule alors à l'intérieur du fusible en sorte que la seconde languette d'alimentation électrique est isolée électriquement par rapport à la douille 6 et que le circuit électrique est interrompu. Cette douille 6 peut atteindre en cas de surchauffe des températures de l'ordre de 150° lorsque le bouchon B est enfoncé.

La pastille 71 est choisie, compte tenu des inerties thermiques, pour fondre par exemple vers 110°. En cas de court-circuit (surintensité de courant), dans le corps d'allumage A, la pastille 71 fond par effet Joule.

Ainsi compte tenu que la douille 6 s'échauffe de manière uniforme en cas de surchauffe, principalement par rayonnement, et qu'elle a une grande surface on obtient grâce à l'invention un dispositif de protection à fusible de sécurité électrique et thermique 16 très précis et très fiable du fait notamment de la présence des ressorts 73,75 et de la pastille 71 permettant d'obtenir un seuil de coupure très précis.

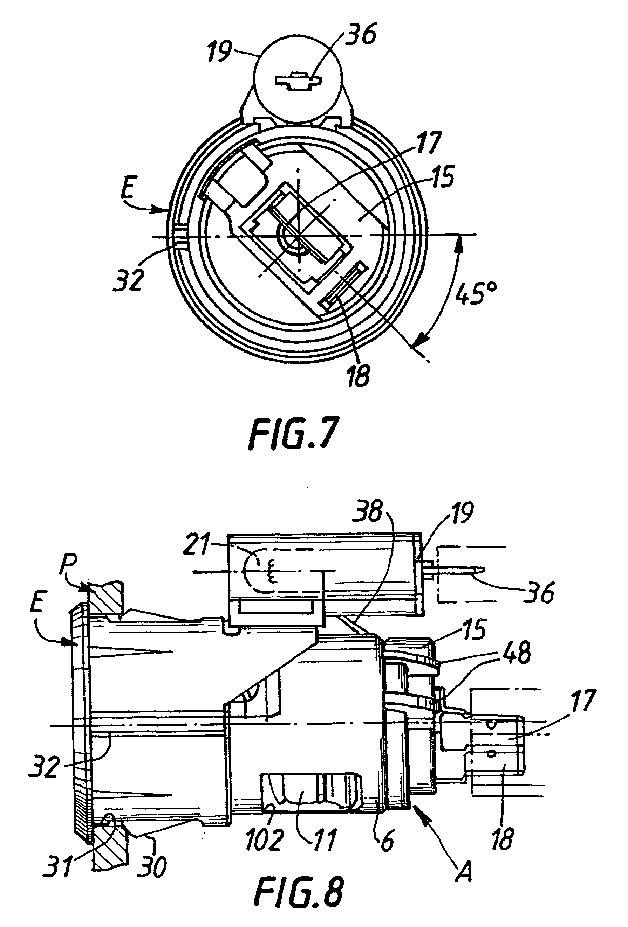

Après cela il ne reste plus qu'à changer le fusible 16 en dévissant la vis 12, ce qui permet de démonter la languette 17 et la rondelle isolante 15. On notera que la localisation du fusible 16 dans la rondelle 15 permet d'éviter toute interférence avec la première languette d'alimentation et avec les connecteurs (représentés en silhouette dans les figures 1 et 8) se branchant sur les parties axiales épaulées à cet effet des languettes d'alimentation 17,18.

D'une manière générale dans les figures représentées le fusible 16 est logé dans une cavité 95 ménagée à cet effet dans la seconde rondelle isolante 15.

Cette cavité 95 est fermée, ici en majeure partie, par une paroi 96 masquant le fusible 16. La paroi 96 enveloppe le boîtier 70 du fusible 16 et présente une portion, formant fond, d'orientation transversale, parallèle au fond 34 de la douille 6 et à la partie principale de la rondelle 15. Cette portion, formant fond, masque le fusible 16 et est décalée axialement par rapport à la rondelle 15 et est donc plus éloignée axialement du fond 34 de la douille 6 que ne l'est la partie principale de la rondelle 15. La portion transversale, formant fond, de la paroi 96 est raccordée par un chanfrein au bord latéral ou jupe de la rondelle 15 (figures 1 et 6).

Le boîtier 70 du fusible 16 est implanté latéralement par rapport à la partie axiale des languettes 17,18.

La seconde rondelle isolante 15 présente donc latéralement une excroissance, ce qui n'est pas gênant car il existe suffisamment de place entre le fond 34 de la douille 6 et le ou les connecteurs femelle se montant sur les languettes 17,18.

On notera, du fait du décalage axial de la portion transversale, formant fond, de la paroi 96 par rapport à la partie principale 80 de la rondelle 15, qu'une fente existe entre la rondelle 15 et la paroi 96 masquant le boîtier 70 du fusible 16 et protégeant donc celui-ci.

La cavité 95 affecte localement donc l'épaisseur de la partie principale 80 de la rondelle 15 en sorte que dans les figures 1 à 11 le fusible 16 s'étend de part et d'autre de ladite partie principale de la rondelle 15 au bénéfice d'une réduction de l'encombrement axial.

Tout contact, entre le fusible 16 et/ou câblage à proximité desquels est implanté le corps d'allumage A, est ainsi évité. Le fusible 16 ne risque pas d'être endommagé. De plus avant montage de l'allume-cigares sur sa paroi fixe P associée, on évite toute détérioration notamment lors du stockage du corps d'allumage et de manipulations.

Dans la première forme de réalisation (figures 1 à 5) le fusible est porté par une pièce porteuse 14, ici métallique, donc électriquement conductrice. Cette pièce 14, distincte de la languette 18, est en contact avec le fond 34 de la douille 6 métallique (figure 5).

Elle est en forme globalement de disque prolongé par une partie d'orientation axiale tronquée pour formation de deux pattes d'agrafage 60 écartées l'une de l'autre (figure 4).

Ces pattes 60, formant moyens d'agrafage, sont recourbées de manière circulaire. Elles s'étendent selon un arc de cercle supérieur à 270°. Leur rayon est fonction du rayon du boîtier 70 du fusible 16 de manière que l'on puisse monter par enfilage à serrage le boîtier 70 à l'intérieur des pattes 60 élastiques.

Bien entendu une seule patte d'agrafage 60 peut être prévue. Cela dépend des applications.

On notera que le boîtier 70 du fusible 16 s'étend globalement perpendiculairement à la partie axiale de la seconde languette d'alimentation 18. Le fusible 16 s'étend latéralement par rapport à l'axe diamétral Y-Y' de la figure 4 en étant parallèle à celui-ci.

Le contact 200 a une forme filiforme en sorte qu'il contourne la partie axiale de la seconde languette d'alimentation 18 pour venir se fixer sur la base 40 de ladite seconde languette d'alimentation 18 (figures 4 et 5). Un contact électrique est ainsi réalisé entre la base 40 et le contact 200. Plus précisément la base 40 présente des moyens de contact sous forme d'une patte roulée 50 pour venir serrer l'extrémité du contact 200. On notera que la base 40 est aisément obtenue par découpe et roulage de la patte 50.

Pour plus de précisions sur la forme de la base 40 on se reportera à la figure 4. Ainsi cette base 40 est en forme de disque tronqué parallèlement à l'axe Y-Y pour ménager un dégagement permettant le montage du boîtier du fusible 16.

Cette base 40 est également tronquée pour formation de la patte roulée 50 autour du fil du contact 200. Le fusible 16 s'étend donc en surélévation par rapport au fond 34 de la douille 6, un jeu séparant les pattes 60 du fond 34. En se reportant à la figure 5, on voit que la pièce porteuse 14 a globalement une forme d'équerre avec une partie transversale en contact avec le fond 34 et une partie d'orientation axiale portant les pattes d'agrafage 60.

La rondelle électriquement isolante 20 est interposée axialement entre la base 40 et la partie transversale de la pièce porteuse 14. La seconde rondelle isolante 15 forme une plaque de pression et présente à cet effet une nervure interne (non référencée) coopérant avec la périphérie externe de la douille de centrage 230 de la première rondelle isolante. L'extrémité libre de la nervure interne, dirigée vers le fond 34, prend appui sur la base 40, en sorte que la base 40, la rondelle 20 et la pièce 14 sont serrées entre la rondelle 15 et le fond 34 en étant assemblées audit fond 34 par l'organe de fixation 12 en prise avec la languette 17.

On appréciera que la seconde languette 18 a une forme simple et qu'elle est calée en rotation à l'aide d'un téton 130, que présente usuellement la première rondelle isolante 13. Ce téton 130 est issu latéralement de la première rondelle 13 et traverse à la faveur de trous alignés axialement le fond 34, la pièce porteuse 14, la rondelle 20, la base 40 pour venir en prise avec une ouverture pratiquée dans la rondelle 15 ainsi immobilisée en rotation.

On conserve la première rondelle d'alimentation 17, la première rondelle isolante 13, le bilame 11, la vis 12 d'un allume-cigares classique. La première rondelle isolante 13 traverse centralement par sa douille de centrage 230 la rondelle isolante 20, la pièce porteuse 14 et la base 40 de la seconde languette 18 comme visible à la figure 1, lesdites pièces étant trouées à cet effet.

Seule la seconde rondelle isolante 15 et la base de la seconde rondelle d'alimentation 18 sont modifiées et ceci de manière simple.

Ainsi le dispositif de protection selon l'invention est particulièrement économique. On retrouve les mêmes avantages dans les figures 6 à 11. Dans ces figures on supprime la pièce porteuse 14 distincte des figures 1 à 5 et le boîtier 70 du fusible 16 est en contact direct avec le fond 34 de la douille 6. La paroi 96 de la rondelle 15 masque le boîtier 70 du fusible 16 comme dans les figures 1 à 5. Ladite paroi 96 a la même forme et présente donc une portion transversale décalée axialement par rapport à la partie principale 80 de la seconde rondelle isolante 15 présentant une jupe latérale. Le fusible 16 s'étend de part et d'autre de ladite partie principale 80.

On appréciera que l'on peut réduire l'encombrement axial entre le fond de la paroi 96 et le fond 34 de la douille 6 par rapport au mode de réalisation des figures 1 à 5. En variante dans le même encombrement axial que celui dans les figures 1 à 5, on peut loger un fusible 16 avec un boîtier cylindrique de plus grand diamètre.

On appréciera que le fusible est peu sensible aux vibrations, puisqu'il est emprisonné entre les parois 96 et 34 comme mieux visible à la figure 6. Ce fusible est implanté latéralement comme dans les figures 1 à 5.

La seconde languette d'alimentation 18 a une autre forme. Elle est obtenue par découpe, comme celle des figures 1 à 5, puis par pliage et roulage.

Dans cette forme de réalisation la seconde languette d'alimentation est initialement plate (en forme de plaque) comme visible à la figure 9. Dans cette figure on voit la seconde languette 18 après découpage. Cette seconde languette 18 présente une ouverture circulaire 83 pour passage de la première rondelle isolante 13 plus précisément de la douille centrale 230 de celle-ci, ladite douille traversant centralement le fond 34 (figure 6). Elle présente également à l'une de ses extrémités axiales une ouverture 90 pour passage du téton ou picot 130 précité de la première rondelle isolante 13 et blocage en rotation de la seconde languette d'alimentation 18 et de la seconde rondelle isolante 15 de manière précitée. L'ouverture 90 est globalement de forme semi-circulaire.

A l'autre de ses extrémités la languette présente une portion élargie 80 avec des encoches en V. Au-dessus de l'ouverture circulaire 83 elle présente une portion en forme de H 81 et présente une portion 82 au voisinage de l'ouverture 90.

La face interne de la languette 18, dirigée vers le fond 34, est recouverte par pulvérisation du revêtement électriquement isolant 120 précité. Ce revêtement recouvre intérieurement la portion 81 mais pas la portion 82. La portion élargie 80 peut ne pas être recouverte.

En variante de préférence le revêtement isolant 120 peut être du type adhésif par exemple collant et être en forme de feuille découpée que l'on pose à l'endroit voulu sur la plaque de la figure 9.

A partir de la figure 9, on replie à 90° la portion 80 tout en effectuant un pliage à la faveur des encoches en V, que présente ladite portion 80 pour doubler l'épaisseur de la seconde languette 18 à cet endroit et former la partie axiale précitée de celle-ci. On notera que la portion 80 est séparée de la partie principale de la languette 18, destinée à former la base 140 de la seconde languette d'alimentation, par des encoches permettant la formation d'un épaulement.

A partir de la figure 9, on roule la portion 81 pour formation d'une patte d'agrafage 160 double pour le montage du boîtier du fusible 16. Plus précisément on roule les parties verticales du H de la portion 81 pour formation de pattes circulaires s'étendant sur plus de 180° reliées entre elles par la partie horizontale du H. On plie également la portion 82 pour formation d'une patte de contact 150 permettant un contact électrique avec le contact 200 du fusible 16. Pour la forme de cette patte, on se reportera à la figure 11, celle-ci ayant globalement une forme d'équerre avec une partie axiale issue de la base 140 et une partie transversale ou verticale à extrémité en forme de V pour logement du contact 200 et coopération avec celui-ci. La partie verticale de la patte 150 est donc conformée par contact électrique avec le contact 200 du fusible 16.

Ainsi qu'il ressort à l'évidence de la description et des dessins, la connexion entre le fusible 16 et la patte 150, ici élastique, est plus courte que dans les figures 1 à 5. La patte 150 est en contact élastique avec le contact 200 ce qui facilite le changement du fusible 16.

Du fait du revêtement 120 on voit que le boîtier 70 est isolé électriquement de la patte 160 dédoublée. Ce revêtement 120 peut consister en un film de polyester indépendant. De préférence on utilise un film polyester thermorétractable et résistant à la déchirure telle que du "Mylar" (marque déposée). Grâce au fusible et à la patte d'agrafage 160 ce revêtement 120 sera rendu solidaire de la seconde languette 18.

On appréciera que la forme de la patte 160 est particulièrement avantageuse car elle permet un bon maintien de ce revêtement 120 indépendant notamment grâce à la partie horizontale du H. Ce revêtement est admis à se rétracter et à épouser la forme du fusible 16 en sorte qu'il conserve la forme du fusible 16 lorsque l'on change celui-ci, ce qui facilite le remplacement du fusible.

Il est possible donc de former un sous-ensemble languette 18 - fusible 16 - revêtement 120 grâce à la patte 160.

La seconde languette d'alimentation 18 est donc réalisée de manière extrêmement simple. On appréciera également qu'il est possible comme visible dans les figures 6 à 11 de réaliser un sous-ensemble comportant le fusible 16, la seconde rondelle d'alimentation 18 et le revêtement électriquement isolant 120 et ce même avec un revêtement indépendant grâce à la patte 160.

Ceci facilite grandement la fabrication du corps d'allumage A et réduit son temps de montage.

Après assemblage le fusible 16 est emprisonné entre la patte double 160 et le fond 34 en étant protégé par la paroi 96.

On retrouve les mêmes avantages que dans les figures 1 à 5 à savoir que l'on conserve un maximum de pièces d'un allume-cigares du type classique.

La modification de la seconde isolante 15 étant réalisée de préférence par moulage. Cette seconde rondelle 15 protégeant grâce notamment à sa jupe et à sa paroi 96 la base 140 de la seconde languette d'alimentation 18 ainsi que les pattes 150,160 et le fusible 16.

Le mode de réalisation des figures 6 à 11 est peu sensible aux chocs et est plus fiable car le fusible est en contact direct avec le fond 34.

Comme dans les figures 1 à 5 la nervure interne de la rondelle 15, centrée par la douille de centrage 230 de la première rondelle isolante 13, sert au serrage de la base 140, revêtue intérieurement de l'isolant 120, au contact du fond 34 et assemblage de la languette 18 porteuse du fusible 16 au fond 34 à l'aide de l'organe 12. Dans toutes les figures la nervure interne de la rondelle 15 est interrompue par la cavité 95 mais cela n'est pas gênant.

Bien entendu l'organe de fixation 12 peut consister en un boulon, la languette 17 n'étant alors pas taraudée. D'une manière générale il est préférable que l'organe de fixation 12 soit du type démontable pour changer aisément le fusible.

En variante le contact 200 peut être soudé directement sur la base 40,140 de la seconde languette d'alimentation 18.

D'une manière générale la seconde languette d'alimentation porte des moyens de contact 50,150 pour contact électrique avec le contact 200 du fusible 16, ledit contact 200 étant plus court dans les figures 6 à 11. La pièce porteuse 14 ou la languette 18 (formant pièce porteuse) est dotée de préférence de moyens d'agrafage 60,160 pour porter de manière amovible le fusible 16. Ceci permet d'utiliser un revêtement isolant indépendant qui sera maintenu par le fusible et les moyens d'agrafage de manière précitée.

Ces moyens d'agrafage 60,160 constituent des moyens de solidarisation pour le fusible 16. Ces moyens de solidarisation 60,160 peuvent avoir une autre forme et être du type rigide. On peut, par exemple à l'aide d'une colle électriquement isolante ou d'un film électriquement isolant, coller le fusible 16 sur sa pièce porteuse 14,18.

La rondelle 20 des figures 1 à 5 peut être fixée par collage à la pièce 14 et à la languette 18 pour formation d'un sous-ensemble.

D'une manière générale, au lieu de changer uniquement le fusible 16, on peut pour aller plus vite changer le fusible 16 et sa pièce porteuse associée 14,18. Dans ce cas dans les figures 6 à 11 on peut souder la patte 150 sur le contact 200 c'est-à-dire sur l'extrémité du fusible 16.

## Revendications

1. Allume-cigares, notamment pour véhicule automobile, comportant un corps d'allumage (A) servant de réceptacle à un bouchon chauffant amovible (B) et présentant à cet effet une douille d'allumage (6), électriquement conductrice, avec un fond (34) de part et d'autre duquel sont montés, d'une part à l'intérieur de ladite douille (6), un bilame (11) et une première pièce électriquement isolante, dite première rondelle isolante (13), et, d'autre part, à l'extérieur de ladite douille (6), une seconde languette d'alimentation électrique (18), dite seconde languette d'alimentation, associée à ladite douille en étant voisine du fond (34) de celle-ci, une seconde pièce électriquement isolante (15), dite seconde rondelle isolante (15), interposée axialement entre la seconde languette d'alimentation (18) et une première languette d'alimentation électrique (17), dite première languette d'alimentation, associée au bilame (11) en étant reliée électriquement à celui-ci par un organe de fixation (12) assemblant le bilame (11), les rondelles isolantes (13,15) et les languettes d'alimentation (17,18) au fond (34) de la douille d'allumage (6), dans lequel un dispositif de protection contre les surchauffes (16) est prévu, **caractérisé en ce que** des moyens d'isolation électrique (20,120) interviennent entre la seconde languette d'alimentation (18) et le fond (34) de la douille d'allumage (6), **en ce que** la seconde languette d'alimentation (18), implantée au voisinage du fond (34) de la douille d'allumage (6), est reliée électriquement audit fond par l'intermédiaire d'un fusible de sécurité électrique et thermique (16) constituant ledit dispositif de protection contre les surchauffes ainsi que contre les surintensités, et **en ce que** la seconde rondelle d'isolation (15) est conformée pour constituer un logement dudit fusible porté par une pièce de support (14,18) distincte ou non de la seconde languette d'alimentation (18), assemblée au fond (34) de la douille d'allumage (6) par l'organe de fixation (12).

2. Allume-cigares selon la revendication 1, **caractérisé en ce que** ledit fusible (16) est porté par une pièce porteuse (14) distincte de la seconde languette d'alimentation (18) et électriquement conductrice, ladite pièce étant en contact avec le fond (34) de la douille d'allumage (6).

3. Allume-cigares selon la revendication 2, dans lequel la seconde languette d'alimentation (18) présente une base (40) parallèle au fond (34) de la douille d'allumage (6), **caractérisé en ce que** des moyens d'isolation électrique (20) interviennent entre cette pièce porteuse (14) et la base (40) de la seconde languette d'alimentation (18) présentant des moyens de contact (50) avec une extrémité du fusible (16).

4. Allume-cigares selon la revendication 2 ou 3, **caractérisé en ce que** ledit fusible (16) s'étend en surélévation par rapport au fond (34) de la douille d'allumage (6) à distance dudit fond à la faveur de moyens de solidarisation (60), que comporte la pièce porteuse (14).

5. Allume-cigares selon la revendication 4, **caractérisé en ce que** les moyens de solidarisation (60) consistent en des moyens d'agrafage (60) dotés d'au moins une patte d'agrafage (60) recourbée de manière circulaire pour entourer un boîtier cylindrique (70) que présente ledit fusible (16).

6. Allume-cigares selon la revendication 1, **caractérisé en ce que** la seconde languette d'alimentation (18) est conformée pour porter directement à isolation électrique à la faveur de moyens de solidarisation (160) le fusible de sécurité électrique et thermique (16).

7. Allume-cigares selon la revendication 6, **caractérisé en ce que** la seconde languette d'alimentation (18) est reliée à la douille d'allumage (6) par ledit fusible (16) en contact électrique, d'une part, avec le fond (34) de la douille d'allumage (6), et, d'autre part, avec la seconde languette d'alimentation (18).

8. Allume-cigares selon la revendication 7, **caractérisé en ce que** la seconde languette d'alimentation (18) présente des moyens d'agrafage (160) pour porter ledit fusible et des moyens de contact (150) pour contact électrique avec un contact (200), que présente ledit fusible.

9. Allume-cigares selon la revendication 8, **caractérisé en ce que** les moyens d'agrafage (160) consistent en une patte d'agrafage double (160) issue d'une portion en forme de H, les parties verticales du H étant roulées.

10. Allume-cigares selon la revendication 8 ou 9, **caractérisé en ce que** lesdits moyens de contact consistent en une patte (150) globalement en forme d'équerre avec une partie verticale conformée pour contact électrique avec ledit contact (200) du fusible (16).

11. Allume-cigares selon l'une quelconque des revendications 1 à 10, **caractérisé en ce que** ledit fusible (16) comporte un boîtier (70) à l'intérieur duquel est logée une pastille thermique fusible (71), un ressort de compression (73) interposé entre deux disques (72) dont l'un est en contact avec ladite pastille (71) et l'autre avec un disque de contact (74) en contact avec l'alésage interne du boîtier (70) et **en ce que** ledit disque de contact (74) est soumis à l'action d'un ressort d'ouverture (75) prenant appui sur un isolateur céramique (76) entourant un contact (200) profilé pour contact avec le disque de contact (74).

12. Allume-cigares selon l'une quelconque des revendications 1 à 11, **caractérisé en ce que** ledit fusible (16) est logé dans une cavité (95) ménagée à cet effet dans la seconde rondelle isolante (15).

13. Allume-cigares selon la revendication 12, **caractérisé en ce que** la cavité (95) est fermée, au moins en majeure partie, par une paroi (96) masquant le fusible (16) et enveloppant le boîtier (70) que présente ledit fusible.

14. Allume-cigares selon la revendication 13, **caractérisé en ce que** la paroi (96) présente une portion, formant fond, d'orientation transversale parallèle au fond (34) de la douille d'allumage (6) et à la partie principale de la seconde rondelle isolante (15).

15. Allume-cigares selon la revendication 14, **caractérisé en ce que** ladite portion, formant fond, est décalée axialement par rapport à la partie principale (80) de la rondelle (15) parallèle au fond (34) de la douille d'allumage (6) et est donc plus éloignée axialement du fond (34) de la douille d'allumage (6) que ne l'est la partie principale de la seconde rondelle isolante (15).

16. Allume-cigares selon la revendication 15, **caractérisé en ce que** la portion, formant fond, de la paroi (96) est raccordée par un chanfrein au bord latéral ou jupe, que présente ladite seconde rondelle isolante (15).

17. Allume-cigares selon l'une quelconque des revendications 13 à 16, **caractérisé en ce que** le fusible (16) s'étend de part et d'autre de la partie principale (80) de la seconde rondelle isolante (15).

## Patentansprüche

1. Zigarettenanzünder, insbesondere für Kraftfahrzeuge, mit einem Zündgehäuse (A), das als Aufnahmebehältnis für ein abnehmbares aufheizbares Steckteil (B) dient und hierzu eine elektrisch leitende Zündhülse (6) mit einem Boden (34) aufweist, an dessen beiden Seiten zum einen innerhalb der Hülse (6) ein Bimetallstreifen (11) und ein erstes elektrisch isolierendes Teil, bezeichnet als erste Isolierscheibe (13), und zum anderen außerhalb der Hülse (6) eine zweite Stromversorgungszunge (18), bezeichnet als zweite Stromversorgungszunge, die der Hülse zugehörig ist und dem Boden (34) derselben benachbart ist, sowie ein zweites elektrisch isolierendes Teil (15), bezeichnet als zweite Isolierscheibe (15), montiert sind, das axial zwischen der zweiten Stromversorgungszunge (18) und einer ersten Stromversorgungszunge (17), bezeichnet als erste Stromversorgungszunge, eingefügt ist, die dem Bimetallstreifen (11) zugehörig ist, indem sie elektrisch mit diesem durch ein Befestigungselement (12) verbunden ist, welches den Bimetallstreifen (11), die Isolierscheiben (13, 15) und die Stromversorgungszungen (17, 18) am Boden (34) der Zündhülse (6) befestigt, in dem eine Überhitzungsschutzeinrichtung (16) vorgesehen ist, **dadurch gekennzeichnet, daß** sich elektrische Isoliermittel (20, 120) zwischen der zweiten Stromversorgungszunge (18) und dem Boden (34) der Zündhülse (6) befinden, daß die zweite Stromversorgungszunge (18), die in der Nähe des Bodens (34) der Zündhülse (6) angeordnet ist, elektrisch mit diesem Boden durch eine elektrische und thermische Schutzsicherung (16) verbunden ist, die die genannte Überhitzungsschutzeinrichtung sowie einen Überlastschutz bildet, und daß die zweite Isolierscheibe (15) so ausgebildet ist, daß sie eine Aufnahme für diese Sicherung bildet, die von einem Trägerteil (14, 18) getragen wird, welches von der zweiten Stromversorgungszunge (18) separat ist oder nicht und durch das Befestigungselement (12) am Boden (34) der Zündhülse (6) befestigt ist.

2. Zigarettenanzünder nach Anspruch 1,
**dadurch gekennzeichnet, daß** die Sicherung (16) von einem Trägerstück (14) gehalten wird, das von der zweiten Stromversorgungszunge (18) separat und elektrisch leitend ist, wobei dieses Trägerstück Kontakt mit dem Boden (34) der Zündhülse (6) hat.

3. Zigarettenanzünder nach Anspruch 2, bei dem die zweite Stromversorgungszunge (18) eine parallel zum Boden (34) der Zündhülse (6) verlaufende Basis (40) aufweist,
**dadurch gekennzeichnet, daß** sich elektrische Isoliermittel (20) zwischen dem Trägerstück (14) und der Basis (40) der zweiten Stromversorgungszunge (18) befinden, die Mittel (50) zum Kontakt mit einem Ende der Sicherung (16) aufweisen.

4. Zigarettenanzünder nach Anspruch 2 oder 3,
**dadurch gekennzeichnet, daß** die Sicherung (16) mit Hilfe von Mitteln zum festen Verbinden (60), die das Trägerstück (14) aufweist, bezüglich des Bodens der Zündhülse (6) erhaben und von diesem beabstandet verläuft.

5. Zigarettenanzünder nach Anspruch 4,
**dadurch gekennzeichnet, daß** die Mittel zum festen Verbinden (60) aus Klammermitteln (60) bestehen, die mit wenigstens einer Halteklammer (60) versehen sind, die kreisförmig gebogen ist, um ein zylindrisches Gehäuse (70) zu umgeben, das die Sicherung aufweist (16).

6. Zigarettenanzünder nach Anspruch 1,
**dadurch gekennzeichnet, daß** die zweite Stromversorgungszunge (18), zum unmittelbaren Tragen der elektrischen und thermischen Schutzsicherung (16) in elektrisch isolierender Weise durch die Mittel zum festen Verbinden (160) ausgebildet ist.

7. Zigarettenanzünder nach Anspruch 6,
**dadurch gekennzeichnet, daß** die zweite Stromversorgungszunge (18) durch die Sicherung (16) mit der Zündhülse (6) einerseits am Boden (34) der Zündhülse (6) und andererseits an der zweiten Stromversorgungszunge (18) elektrisch verbunden ist.

8. Zigarettenanzünder nach Anspruch 7,
**dadurch gekennzeichnet, daß** die zweite Stromversorgungszunge (18) Klammermittel (160) zum Halten der Sicherung und der Kontaktmittel (150) aufweist, um mit einem Kontakt (200) der Sicherung eine elektrische Verbindung herzustellen.

9. Zigarettenanzünder nach Anspruch 8,
**dadurch gekennzeichnet, daß** die Klammermittel (160) aus einem doppelten Klammerarm (160) bestehen, welcher aus einem H-förmigen Teil hervorgeht, wobei die senkrechten Teile des H eingerollt sind.

10. Zigarettenanzünder nach Anspruch 8 oder 9,
**dadurch gekennzeichnet, daß** die Kontaktmittel aus einer Klammer (150) bestehen, die eine insgesamt rechtwinklige Form hat und einen senkrechten Teil aufweist, der zur elektrischen Verbindung mit diesem Kontakt (200) der Sicherung (16) ausgebildet ist.

11. Zigarettenanzünder nach einem der Ansprüche 1 bis 10,
**dadurch gekennzeichnet, daß** diese Sicherung (16) ein Gehäuse (70) umfaßt, in dessen Inneren sich ein thermisches Schmelzplättchen (71) befindet und eine Druckfeder (73) zwischen zwei Scheiben (72) aufgenommen ist, von denen eine Kontakt mit diesem Plättchen (71) und die andere mit einer Kontaktscheibe (74) hat, die mit der Innenbohrung des Gehäuses (70) Kontakt hat, und daß auf diese Kontaktscheibe (74) eine Öffnungsfeder (75) einwirkt, die auf einem Keramikisolator (76) aufliegt, welcher einen profilierten Kontakt (200) umgibt, um einen Kontakt mit der Kontaktscheibe (74) herzustellen.

12. Zigarettenanzünder nach einem der Ansprüche 1 bis 11,
**dadurch gekennzeichnet, daß** die Sicherung (16) in einer Vertiefung (95) liegt, die zu diesem Zweck in die zweite Isolierscheibe (15) gearbeitet ist.

13. Zigarettenanzünder nach Anspruch 12,
**dadurch gekennzeichnet, daß** die Vertiefung (95) wenigsten zum größten Teil durch eine Wand (96) geschlossen ist, die die Sicherung (16) verdeckt und das die Sicherung enthaltende Gehäuse (70) umgibt.

14. Zigarettenanzünder nach Anspruch 13,
**dadurch gekennzeichnet, daß** die Wand (96) einen einen Boden bildenden Abschnitt aufweist, der parallel zum Boden (34) der Zündhülse (6) und dem Hauptteil der zweiten Isolierscheibe (15) quer ausgerichtet ist.

15. Zigarettenanzünder nach Anspruch 14,
**dadurch gekennzeichnet, daß** dieser einen Boden bildende Abschnitt in bezug auf das Hauptteil (80) der parallel zum Boden (34) der Zündhülse (6) ausgerichteten Scheibe (15) axial versetzt ist und folglich vom Boden (34) der Zündhülse (6) axial weiter entfernt ist als das Hauptteil der zweiten Isolierscheibe (15).

16. Zigarettenanzünder nach Anspruch 15,
**dadurch gekennzeichnet, daß** der einen Boden bildende Abschnitt der Wand (96) durch eine Abfasung mit dem Seitenrand oder der Schürze der zweiten Isolierscheibe (15) verbunden ist.

17. Zigarettenanzünder nach einem der Ansprüche 13 bis 16,
**dadurch gekennzeichnet, daß** die Sicherung (16) sich beiderseits des Hauptteils (80) der zweiten Isolierscheibe (15) erstreckt.

## Claims

1. Cigar lighter, notably for a motor vehicle, having a lighting body (A) serving as a receptacle for a removable heated plug (B) and having for this purpose a lighter socket (6), electrically conductive, with a back end (34) on each side of which there are mounted, on the one hand inside the said sleeve (6), a bimetallic strip (11) and a first electrically insulating piece, referred to as the first insulating washer (13) and, on the other hand, outside the said socket (6), a second electrical supply tongue (18), referred to as the second supply tongue, associated with the said socket whilst being adjacent to the back end (34) thereof, a second electrically insulating piece (15), referred to as the second insulating washer (15), interposed axially between the second supply tongue (18) and a first electrical supply tongue (17), referred to as the first supply tongue, associated with the bimetallic strip (11) while being electrically connected to the latter by a fixing member (12) assembling the bimetallic strip (11), the insulating washers (13, 15) and the supply tongues (17, 18) at the back end (34) of the lighter socket (6), in which a device for protecting against overheating (16) is provided, **characterised in that** electrical insulation means (20, 120) intervene between the second supply tongue (18) and the back end (34) of the lighter socket (6), **in that** the second supply tongue (18), located in the vicinity of the back end (34) of the supply socket (6), is electrically connected to the said back end by means of an electrical and thermal safety fuse (16) constituting the said device for protecting against overheating as well as against overcurrent, and **in that** the second insulation washer (15) is conformed so as to constitute a housing for the said fuse carried by a support piece (14, 18) distinct or not from the second supply tongue (18), connected to the back end (34) of the lighter socket (6) by the fixing member (12).

2. Cigar lighter according to Claim 1, **characterised in that** the said fuse (16) is carried by a carrier piece (14) distinct from the second supply tongue (18) and electrically conductive, the said piece being in contact with the back end (34) of the lighter socket (6).

3. Cigar lighter according to Claim 2, in which the second supply tongue (18) has a base (40) parallel to the back end (34) of the lighter socket (6), **characterised in that** electrical insulation means (20) act between this carrier piece (14) and the base (40) of the second supply tongue (18) having means (50) of contact with one end of the fuse (16).

4. Cigar lighter according to Claim 2 or 3, **characterised in that** the said fuse (16) extends so as to project above the back end (34) of the lighter socket (6) at a distance from the said back end by means of connection means (60), which the carrier piece (14) has.

5. Cigar lighter according to Claim 4, **characterised in that** the connection means (60) consist of cramping means (60) provided with at least one cramping lug (60) curved in a circular manner in order to surround a cylindrical casing (70) which the said fuse (16) has.

6. Cigar lighter according to Claim 1, **characterised in that** the second supply tongue (18) is shaped so as to carry the electrical and thermal safety fuse (16) directly with electrical insulation by means of fixing means (160).

7. Cigar lighter according to Claim 6, **characterised in that** the second supply tongue (18) is connected to the lighter socket (6) by the said fuse (16) in electrical contact on the one hand with the back end (34) of the lighter socket (6) and on the other hand with the second supply tongue (18).

8. Cigar lighter according to Claim 7, **characterised in that** the second supply tongue (1S) has cramping means (160) for carrying the said fuse and contact means (150) for electrical contact with a contact (200) which the said fuse has.

9. Cigar lighter according to Claim 8, **characterised in that** the cramping means (160) consist of a double cramping lug (160) issuing from an H-shaped portion, the vertical parts of the H being rolled.

10. Cigar lighter according to Claim 8 or 9, **characterised in that** the said contact means consist of a lug (150) roughly in the form of a square bracket with a vertical part shaped for electrical contact with the said contact (200) of the fuse (16).

11. Cigar lighter according to any one of Claims 1 to 10, **characterised in that** the said fuse (16) has a casing (70) inside which is housed a fusible thermal slug (71), a compression spring (73) interposed between two discs (72), one of which is in contact with the said slug (71) and the other with a contact disc (74) in contact with the internal bore of the casing (70) and **in that** the said contact disc (74) is subjected to the action of an opening spring (74) bearing on a ceramic insulator (76) surrounding a contact (200) profiled for contact with the contact disc (74).

12. Cigar lighter according to any one of Claims 1 to 11, **characterised in that** the said fuse (16) is housed in a cavity (95) provided for this purpose in the second insulating washer (15).

13. Cigar lighter according to Claim 12, **characterised in that** the cavity (95) is closed off, at least for the major part, by a wall (96) masking the fuse (16) and enclosing the casing (70) which the said fuse has.

14. Cigar lighter according to Claim 13, **characterised in that** the wall (96) has a portion, forming a back end, with a transverse orientation parallel to the back end (34) of the lighter sleeve (6) and to the main part of the second insulating washer (15).

15. Cigar lighter according to Claim 14, **characterised in that** the said portion forming a back end is offset axially with respect to the main part (80) of the washer (15) parallel to the back end (34) of the lighter socket (6) and is therefore further away axially from the back end (34) of the lighter socket (6) than the main part of the second insulating washer (15).

16. Cigar lighter according to Claim 15, **characterised in that** the portion, forming a back end, of the wall (96) is connected by a bevel to the lateral edge or skirt which the said second insulating washer (15) has.

17. Cigar lighter according to any one of Claims 13 to 16, **characterised in that** the fuse (16) extends on each side of the main part (60) of the second insulating washer (15).
